# EUROPÄISCHE PATENTSCHRIFT

(11) **EP 2 601 056 B1**
(45) Veröffentlichungstag und Bekanntmachung des Hinweises auf die Patenterteilung: **14.10.2015**
(21) Anmeldenummer: 11797178.8
(22) Anmeldetag: 02.08.2011
(51) Int. Cl.: B42D 25/00

(54) **HAFTVERMITTLERSCHICHT FÜR DIE VERBINDUNG EINES HOLOGRAFISCHEN DATENTRÄGERS MIT EINEM SUBSTRAT**
ADHESION PROMOTER LAYER FOR CONNECTING A HOLOGRAPHIC DATA CARRIER TO A SUBSTRATE
COUCHE DE LIAISON ADHÉSIVE SERVANT À COLLER UN SUPPORT DE DONNÉES HOLOGRAPHIQUE SUR UN SUBSTRAT

(30) Priorität: 02.08.2010 DE 102010033049
(43) Veröffentlichungstag der Anmeldung: 12.06.2013
(73) Patentinhaber: Bundesdruckerei GmbH, 10958 Berlin (DE)
(72) Erfinder: SIEBERT, Martin, 10965 Berlin (DE); KRÜGER, Per, 14197 Berlin (DE); LEOPOLD, André, 10119 Berlin (DE); MAERTENS, Detlef, 13599 Berlin (DE); GAHLBECK, Jeffry, 12437 Berlin (DE)
(74) Vertreter: Jungblut & Seuss
(86) Internationale Anmeldenummer: PCT/DE2011/001541
(87) Internationale Veröffentlichungsnummer: WO 2012/019588

(56) Entgegenhaltungen:
- EP-A2- 0 250 227
- DE-A1-102008 049 631

## Beschreibung

### Gebiet der Erfindung.

Die Erfindung betrifft ein Verfahren zur Herstellung eines Laminatverbundes für ein Sicherheits- und/oder Wertdokument enthaltend zumindest eine erste Polymerschicht, eine zweite Polymerschicht und ein zwischen die erste Polymerschicht und die zweite Polymerschicht einzulaminierendes Sicherheitsmerkmal und mit den folgenden Verfahrensstufen: a) zumindest eine Seite des Sicherheitsmerkmales oder die dem Sicherheitsmerkmal zugewandte Seite der ersten Polymerschicht wird mit einem Klebstoff beschichtet, b) die erste Polymerschicht und das Sicherheitsmerkmal werden zueinander positioniert und miteinander kontaktiert, c) der Klebstoff wird vernetzt, und d) die erste und die zweite Polymerschicht werden unter Einschluss des Sicherheitsmerkmales unter Einwirkung von Druck sowie Erwärmung miteinander laminiert. Die Erfindung betrifft weiterhin einen so erhältlichen Laminatverbund bzw. ein Sicherheits- und/oder Wertdokument mit einem solchen Laminatverbund.

Stand der Technik und Hintergrund der Erfindung.

Deutsche Personaldokumente werden über Sicherheitselemente, beispielsweise ein Volumenhologramm. abgesichert. Solche Sicherheitselemente sind in einem Laminatverbund aus Polymerfolien einlaminiert.

Hierzu werden die Sicherheitselemente typischerweise auf der Vorder- und/oder Rückseite mit Schmelzklebstoffen bzw. thermoplastischen Kleber versehen. Hierzu gehören auch wachsartig klebrige Zubereitungen.

Die Sicherheitselemente werden in der Regel erst auf eine polymere Trägerfolie appliziert, bevor diese dann zu einem Verbund aus Polymerfolien, dem Kartenkörper, zusammengeführt werden. Die Applizierung auf die Trägerfolie erfolgt dabei über einen Prägeprozess mittels eines beheizten Stempels.

Die Karte wird dann durch Laminieren des Kartenkörpers mit der Trägerfolie, unter Einschluss des Sicherheitselementes, hergestellt.

Dieser insofern aus der Praxis bekannte Stand der Technik hat den Nachteil, dass durch die Einwirkung des Druckes beim Prägen oder Laminieren das Sicherheitselement wegfließen, sich verziehen oder einreißen kann. Der Klebstoff wirkt dabei insbesondere bei erhöhter Temperatur wie eine fließfähige Gleitschicht, weil der Klebstoff aufgrund seiner Thermoplastizität bei höheren Temperaturen sich verflüssigt, zumindest aber erheblich erweicht und eine geringere Scherfestigkeit aufweist.

Aus der Literaturstelle DE 10 2004 012 787 A1 ist es bekannt, ein Volumenhologram vor der Laminierung in den PC-Schichtaufbau einzulegen und mit oder ohne Haftvermittler zu laminieren.

Die Integration eines Volumenhologramms in einen Kartenkörper erfolgt nach dem Stand der Technik über einen reaktiven (UV-)Klebstoff, sowie geschützt durch einen Schutzlack oder eine Schutzfolie. Zu diesem Zweck wird das Volumenhologramm auf einen fertigen Kartenkörper (bevorzugt im Überformat) aufgeklebt. Zu diesem Zweck wird die ablösbare Schutzfolie entfernt, das freiliegende Photopolymer in Kontakt mit Klebstoff (und Kartenkörper) gebracht, der Klebstoff fixiert, im Anschluss erfolgt das Entfernen der Trägerfolie sowie das Lackieren der Oberfläche, alternativ das Aufbringen einer Schutzfolie. Hierzu wird ergänzend auf die Literaturstelle DE 102009007552 A1 verwiesen.

Hauptnachteil dieses Verfahrens ist die Notwendigkeit eines separaten Fertigungsschrittes, was einen hohen Aufwand an Maschineninvestition sowie laufenden Kosten, Personal usw. mit sich führt. Das Einbringen eines teilflächigen Hologramms oder das Einbringen eines Hologramms in den Kartenkörper ist gar nicht möglich. Weiterhin schließt sich das Prägen während des Laminierprozesses mit einem späteren Aufbringen einer Schutzfolie in der Regel aus.

Für den Fall z.B. einer Reisepasskarte, die eine Lasche besitzt, besteht auch das Problem eines sauberen Randabschnitts des Hologramms. Auch die Lösung dieses Problems ist nach dem Stand der Technik noch nicht bekannt.

Dokument DE 102008049631 A1 offenbart ein:
"Verfahren zur Herstellung eines Laminatverbundes für ein Sicherheits- oder Wertdokument enthaltend eine erste Polymerschicht und eine zweite Polymerschicht, und ein zwischen die erste Polymerschicht und die zweite Polymerschicht einzulaminierendes Hologramm und mit den folgenden Verfahrensstufen:
   a) eine Seite des Hologrammes wird mit einem Klebstoff beschichtet, welcher reaktiv ist,
   b) die erste Polymerschicht und das Sicherheitsmerkmal werden zueinander positioniert und miteinander kontaktiert,
   c) der Klebstoff wird vernetzt, und
      gleichzeitig mit Schritt c)
   d) werden die erste und die zweite Polymerschicht unter Einschluss des Hologrammes unter Einwirkung von Druck sowie Erwärmung miteinander laminiert.

Technisches Problem der Erfindung.

Der Erfindung liegt daher das technische Problem zu Grunde, ein Verfahren zur Herstellung eines Laminatverbundes mit innenliegendem Sicherheitselement anzugeben, welches eine verschiebungsfreie Positionierung des Sicherheitselementes und dessen Fixierung auch während des Laminierprozesses gewährleistet. Weiterhin liegt der Erfindung das technische Problem zu Grunde, ein Sicherheitselement, insbesondere ein Hologramm, beispielsweise ein Volumenhologramm, in einen Kartenkörper mit reduziertem Aufwand zu integrieren, und zwar mit hoher Sicherheit gegen ein Delaminieren.

Grundzüge der Erfindung und bevorzugte Ausführungsformen.

Zur Lösung dieses technischen Problems lehrt die Erfindung ein Verfahren nach Anspruch 1.

Mit der Erfindung wird erreicht, dass das Sicherheitselement zunächst sicher und ohne die Gefahr einer Verschiebung bei den erhöhten Temperaturen und Drucken des (anschließenden) Laminierprozesses mit der ersten Polymerfolie verbunden wird. Durch die Vernetzung des Klebstoffes vor dem Laminieren kann dieser beim Laminieren nicht mehr als fließfähige Gleitschicht funktionieren, vielmehr ist der Verbund aus erster Polymerfolie und Sicherheitselement in Hinblick auf die laterale Position des Sicherheitselementes fest. Ein Verschwimmen, Verziehen oder Zerreißen des Sicherheitselementes beim Laminieren ist folglich unterbunden.
Hierbei ist es von Vorteil, das bezüglich Stufe c) auf den Verbund aus Sicherheitselement und Polymerschicht nur ein geringer Druck ausgeübt werden muss, welcher im Normalfall deutlich unterhalb des Drucks in Stufe d) liegt. Bevorzugt sind Drücke (in Richtungen orthogonal zu den Hauptflächen der Polymerschicht) in Stufe c) von weniger als 1 bar, während die Drücke beim Laminieren typischerweise bei 5 bar bis 10 bar liegen.

Weiterhin wird erreicht, dass der Laminatverbund zum (sicheren) Ein- bzw. Auflaminieren in oder auf einen Kartenkörper aus einer Mehrzahl (zumindest einer weiterer) von Polymerschichten geeignet ist. Hierbei spielt eine Rolle, dass beispielsweise Hologramme aus Polymeren, insbesondere Photopolymeren, gebildet sind, welche nur schwer bzw. mit geringer Haftkraft in Kartenkörper aus üblichen Polymerwerkstoffen, beispielsweise Polycarbonat, einlaminierbar sind. Dadurch, dass zumindest eine Seite des Sicherheitsmerkmals, vorzugsweise beide, mittels reaktivem Klebstoff mit der ersten und/oder der zweiten Polymerfolie verbunden wird, kann der Polymerwerkstoff der ersten und/oder der zweiten Polymerfolie mit der Maßgabe gewählt werden, dass dieser sicher gegen Delaminieren mit einer oder mehreren weiteren Polymerfolien eines Kartenkörpers mit solchen weiteren Polymerfolien laminierbar ist. Beispielsweise kann die erste und/oder die zweite Polymerfolie aus dem gleichen Polymerwerkstoff, wie die weitere Polymerfolie(n) gebildet sein, zumindest jedoch laminiertechnisch hiermit kompatibel sein. Im Ergebnis sind das Sicherheitsmerkmal mittels des reaktiven Klebstoffes delaminiersicher mit der ersten bzw. zweiten Polymerfolie und die erste bzw. zweite Polymerfolie delaminiersicher mit der zumindest einen weiteren Polymerschicht eines Kartenkörpers verbunden.

Ein erfindungsgemäßer Laminatverbund ist insbesondere geeignet, in einem separaten, weiteren Laminierverfahrensschritt mit zumindest einer weiteren Polymerfolie zu einem Kartenkörper laminiert zu werden. Dabei können zumindest zwei weitere Polymerfolien, jede auf einer Seite eines erfindungsgemäßen Laminatverbundes, vorgesehen sein und mit dem Laminatverbund laminiert werden. Alternative kann lediglich auf einer Seite zumindest eine weitere Polymerschicht, optional mehrere weitere Polymerschichten, angeordnet und mit dem Laminatverbund laminiert werden. In jedem Fall kann die Laminierung mit der weiteren Polymerschicht bzw. den weiteren Laminierschichten standgenau bzw. registergenau erfolgen, mit lateralen Abweichungen gegenüber einer Sollpositionierung von weniger als 1000 µm, insbesondere weniger als 100 µm, vorzugsweise weniger als 10 µm, oder gar weniger als 5 µm.

Reaktive Klebstoffe sind solche, bei welchen eine Vernetzung eines Grundpolymers unter Vernetzungsbedingungen erfolgt. Diese unterscheiden sich von den rein thermoplastischen Klebstoffen, wie beispielsweise Schmelzkleber, dadurch, dass der Klebstoff Polymere, Substanzen oder chemische Gruppen enthält, die miteinander zu reagieren vermögen, wobei durch diese Reaktion eine Erhöhung des Molekulargewichtes des Grundpolymers um zumindest den Faktor 2, meist 10 und mehr, erfolgt. Bei den Schmelzklebers erfolgt eine solche Molekulargewichtserhöhung dagegen nicht. Der Klebstoff von Schmelzklebern lässt sich immer wieder durch Temperaturerhöhung aufschmelzen. Das erfindungsgemäße Verfahren kann jedoch grundsätzlich auch mit Nicht-Reaktivklebstoffen ausgeführt werden, beispielsweise mit Schmelzkleber, insbesondere in Fällen, in welchen das Sicherheitsmerkmal nicht druckempfindlich und/oder verschiebegefährdet ist.

Als reaktive Klebstoffe sind grundsätzlich verschiedenste Systeme einsetzbar. In Frage kommen einerseits Einkomponentensysteme (1 K-Systeme), also fertig gemischte Zubereitungen mit je nach Bedarf unterschiedlich langen Topfzeiten. Hierunter fallen wärmevernetzbare Systeme mit einem Grundpolymer und einem wärmeaktivierten Vernetzer. Dies umfasst Epoxide, Urethane Polyester und Polyimide. Hierunter fallen des Weiteren strahlungsvernetzbare Systeme, welche meist auf Acrylbasis aufgebaut sind. Schließlich umfasst dies Systeme, die durch Feuchtigkeit vernetzen, worunter Cyanacrylate und Urethane fallen. In Frage kommen aber ebenso Zweikomponentensysteme (2K-Systeme), bei welchen Grundpolymer und Vernetzungsmittel erst kurz vor der Erzeugung der Klebstoffschicht miteinander gemischt werden und die Vernetzung ohne die Notwendigkeit der Zufuhr von Wärme oder Strahlung erfolgt. Hierbei handelt es sich meist um Acrylate, Urethane, Polyester und Epoxide. Bevorzugt sind aufgrund der einfacheren Verarbeitung Einkomponentensysteme.

Im Rahmen der Erfindung sind die verschiedensten Weiterbildungen möglich.

So kann vorgesehen sein, dass in Stufe b) oder nach Stufe c) und vor Stufe d) die zweite Polymerschicht zum Sicherheitsmerkmal positioniert und hiermit kontaktiert wird. Also ist es einerseits möglich, dass zunächst die erste Polymerschicht und das Sicherheitselement miteinander verbunden werden, mit Vernetzung des Klebstoffes, und dann der Verbund mit der zweiten Polymerschicht hergestellt wird. Ebenso ist es möglich, dass erste Polymerfolie, Sicherheitselement und zweiten Polymerfolie miteinander zusammengefügt werden, dann die Vernetzung des Klebstoffes erfolgt und anschließend das Laminieren durchgeführt wird.

In Stufe a) kann die erste Polymerfolie vollflächig mit dem Klebstoff beschichtet werden. Alternativ kann in Stufe a) die erste Polymerschicht nur in Bereichen mit Klebstoff beschichtet werden, welche mit dem Sicherheitselement kontaktiert werden. Das Sicherheitselement kann auch selbst den reaktiven Klebstoff tragen, auf einer oder auf beiden Seiten. Ebenso ist es möglich, dass die der der ersten Polymerschicht abgewandten Seite einen Klebstoff trägt, welcher nicht reaktiv ist, beispielsweise einen üblichen Schmelzkleber.

Bevorzugt ist der reaktive Klebstoff thermisch oder mittels Licht vernetzbar. Er kann insbesondere bei einer Temperatur im Bereich von 40 °C bis 150 °C, vorzugsweise von 80 °C bis 140 °C, thermisch vernetzbar sein. Dies ist unterhalb der Temperaturen, die für das Laminieren in der Stufe d) üblich sind, welche beispielsweise für Polycarbonat im Bereich 160 °C bis 185 °C liegen.

Als Beispiel eines geeigneten thermisch vernetzbaren Klebstoffes sei hier als Klebstoff ein 1 K-Klebstoff auf Polyesterbasis genannt, mit einer Schmelztemperatur von 55 °C zusammen mit dem peroxidischen Vernetzer Trigonox D (Akzo Nobel).

Das Auftragen des Klebstoffes kann ich fachüblicher Weise beispielsweise mittels Rakeln, Gießen oder Flexodruck auf das Sicherheitsmerkmal und/oder die erste und/oder die zweite Polymerschicht erfolgen. Die Schichtdicke des Klebstoffes wird dabei vorzugsweise im Bereich 1 - 50 µm, vorzugsweise 5 bis 20 µm, gewählt. Hierbei erfüllt der Klebstoff insbesondere im Falle von Volumenhologrammen eine weitere Funktion, nämlich einen Ausgleich von Rauhigkeiten der ersten und/oder der zweiten Polymerschicht und/oder des Dicherheitsmerkmales zu bewirken. Eine gewisse Rauhigkeit jedenfalls der ersten und/oder der zweiten Polymerschicht, beispielsweise aus Polycarbonat, ist für einen Laminierprozess wichtig, da zu glatte Oberflächen schlechter laminierbar sind vor dem Hintergrund, dass sich zwischen glatten Fläche befindliche Luft schlechter herausstreichen läßt und somit unerwünschte Lufteinschlüsse in dem Laminat entstehen können. Andererseits stört eine für das Laminieren vorteilhafte Rauhigkeit bei der Auslesung insbesondere eine Hologramms.

Im Falle der Vernetzung mittels Licht wird vorzugsweise mit sichtbarem Licht und/oder mit UV-Strahlung und mit einer Bestrahlungsintensität von 100 bis 5000 mW/cm², insbesondere von 100 bis 1000 mW/cm², vorzugsweise von 200 bis 600 mW/cm², gearbeitet. Dies kann beispielsweise in einem Plextor- bzw. Beltrontrockner erfolgen.

Die erste Polymerschicht kann eine Deckfolie und/oder die zweite Polymerschicht eine Overlayfolie sein. Das Sicherheitselement ist ein Volumenhologramm. Die erste und die zweite Polymerfolie bestehen aus einem laminierfähigen Poylmerwerkstoff, welche in der Technologie der Sicherheits- und/oder Wertdokumente fachüblich ist. Hierzu zählen beispielsweise PC (Polycarbonat, insbesondere Bisphenol A Polycarbonat), PET (Polyethylenglykolterephthalat), PET-G, PET-F, PMMA (Polymethylmethacrylat), ABS (Acrylnitril-Butadien-Styrol), PE (Polyethylen), PP (Polypropylen), PI (Polyimid oder Poly-trans-Isopren), PVC (Polyvinylchlorid) und Copolymere solcher Polymere. Bevorzugt ist PC.

Die erste Polymerschicht, wenn als Deckschicht ausgeführt, ist vorzugsweise transparent. Eine Deckschicht ist transparent im Sinne der Erfindung, wenn sie für sichtbares Licht oder zumindest einen Teilbereich der sichtbaren Wellenlängen durchlässig ist. Eine transparente Deckschicht kann auch für Strahlung außerhalb des sichtbaren Lichtes (IR, UV) transparent sein, ist jedoch vorzugsweise hierfür nicht transparent. Der Begriff transparent bezeichnet bezüglich der betreffenden Wellenlängen einen Transmissionsgrad von mehr als 0,005, vorzugsweise mehr als 0,01, höchstvorzugsweise von mehr als 0,1.

Die Polymerwerkstoffe der ersten Polymerschicht und der zweiten Polymerschicht können gleich oder verschieden sein und aus einem Grundpolymer ausgewählt aus der Gruppe bestehend aus "PC (Polycarbonat, insbesondere Bisphenol A Polycarbonat), PET (Polyethylenglykolterephthalat), PET-G, PET-F, PMMA (Polymethylmethacrylat), ABS (Acrylnitril-Butadien-Styrol), PE (Polyethylen), PP (Polypropylen), PI (Polyimid oder Poly-trans-Isopren), PVC (Polyvinylchlorid) und Copolymere solcher Polymere" gebildet sein. Bevorzugt ist PC.

Die erste Polymerschicht kann eine Dicke von 20 - 250 µm, vorzugsweise 20 - 150 µm, aufweisen, es handelt sich dann um Polymerfolien. Bei der zweiten Poylmerschicht kann es sich ihrerseits um einen Verbund aus einer Mehrzahl von Polymerschichten handeln. Deren Dicke kann im Bereich von 20 - 2000 µm liegen. Es kann sich aber auch um eine einzelne Polymerschicht entsprechend der ersten Polymerschicht mit Dicken in deren Bereich handeln.

Die Erfindung betrifft des Weiteren einen Laminatverbund nach Anspruch 7.

Die Erfindung betrifft weiterhin ein Sicherheits- und/oder Wertdokument enthaltend einen erfindungsgemäßen Laminatverbund.
Die Erfindung betrifft schließlich auch ein Verfahren zur Herstellung eines Kartenkörpers eines erfindungsgemäßen Sicherheits- und/oder Wertdokumentes nach Anspruch 8, wobei anschließend an die Verfahrensstufe c) oder d) der Laminatverbund einseitig oder beidseitig mit zumindest einer weiteren Polymerschicht oder zumindest zwei weiteren Polymerschichten flächig kontaktiert und anschließend damit laminiert wird. In der Alternative mit einseitig angeordneter weiterer Polymerschicht kann der Kartenkörper anschließend auf der der weiteren Polymerschicht gegenüber liegenden Seite des Laminatverbundes lackiert oder mit einer Schutzfolie bedeckt wird. Das Grundpolymer der ersten und/oder oder zweiten Polymerschicht ist vorzugsweise gleich dem Grundpolymer der weiteren Polymerschicht bzw. Polymerschichten ist, wobei die erste und die zweite Polymerschicht optional aus verschiedenen Grundpolymeren aufgebaut sein kann. Das Grundpolymer kann ausgewählt sein aus der Gruppe bestehend aus PC (Polycarbonat, insbesondere Bisphenol A Polycarbonat), PET (Polyethylenglykolterephthalat), PET-G, PET-F, PMMA (Polymethylmethacrylat), ABS (Acrylnitril-Butadien-Styrol), PE (Polyethylen), PP (Polypropylen), PI (Polyimid oder Poly-trans-Isopren), PVC (Polyvinylchlorid) und Copolymere solcher Polymere, vorzugsweise PC ist. Für die erste Polymerschicht und die zweite Polymerschicht (und folglich den hiermit durch Laminieren jeweils zu verbindenden weiteren Polymerschichten) können jeweils aus unterschiedlichen Grundpolymeren aufgebaut sein, bevorzugt ist jedoch der Aufbau mit gleichen Grundpolymeren.

Im Kern wird im Rahmen einer Variante der Erfindung das Volumenhologramm in einen laminierfähigen Zustand gebracht. Zu diesem Zweck wird es mindestens einseitig mit einer ersten Polymerschicht (Folie) versehen, die sich mit den weiteren Polymerschichten, also dem Rest des Kartenkörpers, laminieren lässt, bevorzugt also dem gleichen Material bzw. Grundpolymer besteht, wie die anliegende Grenzfläche innerhalb des Kartenkörpers. Im Anschluss wird die die so präparierte Sicherheitsmerkmal (Hologrammfolie) mit den weiteren Polymerschichten (anderen Folien) des Dokumentenaufbaus standgenau zusammengebracht und in einem Schritt laminiert.

Eine der beiden Polymerschichten (die obere Folie) kann gleich als Schutzfolie fungieren.

Als Alternative kann das Sicherheitselement bzw. die Hologrammfolie auch geschnitten und z.B. als Patch in das Folienheft eingebracht werden. Zu diesem Zweck kann es vor dem Laminationsschritt bereits auf einer Folie (der ersten oder zweiten Polymerschicht) oder ein Element bzw. eine ein solches Element tragende erste und/oder zweite Polymerschicht fixiert werden. Das Element kann ein (weiteres) Sicherheitsmerkmal sein (dabei sind sowohl optische als auch elektronische Komponenten gemeint, also z.B. Farben mit Kippeffekten, personalisierte Elemente, aber auch Bereiche über Chips, Displays, etc.)

Die erste und/oder die zweite Polymerschicht (an das Sicherheitselement unmittelbar angrenzende Folien) können dotiert sein, um Laserpersonalisierungen durchzuführen. Sie können selbstverständlich auch vorher oder nachher bedruckt sein. Bevorzugt existiert ein Sicherheitsdruck (UV, VFS und/oder TR) vorzugsweise auf der Seite, die dem Sicherheitselement bzw. der Photopolymer zugewandt ist, optional aber auch (ggf. zusätzlich) auf der gegenüberliegenden Seite.

Im Folgenden wird die Erfindung anhand von lediglich Ausführungsformen darstellenden Beispielen näher erläutert.

### Beispiel 1: Herstellung eines erfindungsgemäßen Sicherheits- und/oder Wertdokumentes

Eine Polycarbonat Trägerfolie (Deckfolie) wird mit einem Sicherheitselement kontaktiert, welches auf der der Trägerfolie zugewandten Seite eine Schicht mit einem 1 K-Klebstoff auf Polyesterbasis mit einer Schmelztemperatur von 55 °C zusammen mit dem peroxidischen Vernetzer Trigonox D (Akzo Nobel) trägt (Schichtdicke des Klebstoffes: zwischen 1 µm und 50 µm). Auf der der Trägerfolie gegenüberliegenden Seite des Sicherheitselementes ist ebenfalls eine Klebstoffschicht aufgetragen, wobei die Art des Klebstoffes beliebig ist. Für dessen Schichtdicke gilt das vorstehend Gesagte. Auf dieser Seite wird ist des Weiteren eine Overlayfolie, ebenfalls aus Polycarbonat, angeordnet. Der Verbund aus Deckfolie, Sicherheitselelement und Overlayfolie wird dann ohne Druck oder nur geringem Druck, bevorzugt unterhalb von 1 bar auf eine Temperatur ca. 120 °C erwärmt. Im Rahmen von DSC Messungen wurde festgestellt, dass der verwendete 1 K-Klebstoff bei 116,4 °C ein exothermes Maximum hinsichtlich der Vernetzungsreaktion, zeigt. Anschließend erfolgt die Laminierung bei 170 °C und 8 bar.

### Beispiel 2: Alternative Herstellung eines erfindungsgemäßen Sicherheits- und/oder Wertdokumentes

Eine Polycarbonat Trägerfolie (Deckfolie) wird mit einem Sicherheitselement kontaktiert, wobei die Trägerfolie eine Schicht aus aus dem beschriebenen 1 K-Klebststoff trägt (Schichtdicke des Klebstoffes: zwischen 1 µm und 50 µm). Die Schicht aus besagtem Klebstoff kann dabei vollflächig auf der Trägerfolie angeordnet sein, oder nur in dem Bereich, der mit dem Sicherheitselement kontaktiert wird ("patch"). Das Sicherheitselement trägt auf der der Trägerfolie zugewandte Seite keine Klebstoffschicht. Auf der der Trägerfolie gegenüberliegenden Seite des Sicherheitselementes ist demgegenüber eine Klebstoffschicht aufgetragen, wobei die Art des Klebstoffes beliebig ist. Für dessen Schichtdicke gilt das vorstehend Gesagte. Auf dieser Seite wird ist des Weiteren eine Overlayfolie, ebenfalls aus Polycarbonat, angeordnet. Der Verbund aus Deckfolie, Sicherheitselelement und Overlayfolie wird dann ohne Druck oder nur geringem Druck unterhalb von 1 bar auf eine Temperatur von zumindest 116 °C, vorzugsweise von mehr als 120 °C erwärmt. Im Rahmen von DSC Messungen wurde festgestellt, dass der hier beschriebene 1 K-Klebstoff bei 116,4 °C ein exothermes Maximum hinsichtlich der Vernetzungsreaktion zeigt. Anschließend erfolgt die Laminierung bei 170 °C und 8 bar.

### Beispiel 3: Weiterhin alternative Herstellung eines Kartenkörpers

Die Herstellung des laminierfähigen Folienverbundes erfolgt über einen ein- oder zweiseitigen Kaschierprozess. Die Schutzfolie des Photopolymers (Sicherheitsmerkmal bzw. -element) wird abgezogen, und die erste Folie wird aufgeklebt. Zum Aufkleben wird die erste Folie oder das Photopolymer mit dem Reaktivklebstoff beschichtet (z.B. Rakeln, Flexo, usw.) und die beiden Folien in Kontakt gebracht, Dann wird der Klebstoff fixiert (UV, thermisch, .,.) und ein fester Verbund geschaffen.

Dieser Schritt wird ggf. mit der anderen Seite wiederholt.

Als Deckfolien kommt an der zumindest der dem späteren Kartenkörper zugewandten Seite eine Folie zum Einsatz, die sich mit der Grenzfläche des Kartenkörpers laminieren lässt. Die Folie selbst kann eine Dicke zwischen 5 und 500 µm aufweisen. Besonders dünne Folien, wie z.B. 5 oder 10 µm, lassen sich z.B. im Gießverfahren herstellen. Für diesen Schritt kann ein Kaschierer, wie bespielsweise bei der Herstellung des alten Personalausweises verwendet, eingesetzt werden werden.

Es entsteht damit eine Laminatverbund (Folie), der bzw. die auf mindestens einer Seite laminierfähig ist. Diese Folie wird zur Laminationsstation transportiert. An dieser Laminationsstation (Bogen- oder Streifenlamination, bevorzugt Streifenlamination) erfolgt das Zusammentragen des Laminathefts. Zu diesem Zweck befinden sich in der Photopolymerfolie Steuermarken (z.B. holographische), die ausgelesen und zur Positionierung verwendet werden.

In einer besonderen Ausführungsform ist die Photopolymerfolie personalisiert. Zu diesem Zweck werden auch Personalisierungsinformationen, zum Beispiel eine Seriennummer, ausgelesen und mit anderen Elementen des Laminatheftes, zum Beispiel ebenfalls eine Seriennummer, abgeglichen. Auf diese Weise kann ein nicht nur positions-, sondern auch nutzergenaues Zusammentragen erfolgen, indem die Folie nutzerweise geschnitten und nutzerweise aufgebracht wird und z,B, durch eine thermische oder Ultraschallheftung fixiert wird.

Im weiteren Verlauf können noch weitere Folien aufgetragen werden, wenn der Folienverbund nicht die oberste Lage darstellen soll.

Im Anschluss erfolgt die Lamination. Während dieses Prozesses wird der Kartenkörper geschaffen, in dem die Photopolymerfolie integriert ist. Während des Laminationsprozesses können auch auf der Seite des Photopolymers Prägungen eingebracht werden. Die Prägungen können Symbole, Schriften etc. sein, aber auch funktionelle Elemente wie Linsenraster und dergleichen. Sollte die vom Kartenkörper weg zeigende Seite der Photopolymerfolie keinen eigenen Schutz besitzen (z.B. in Form einer Folie), so kann der Laminatbogen oder -streifen lackiert werden.

Im nächsten Schritt erfolgt die Stanzung der Karte, Gegebenfalls erfolgt hinterher eine Einzelkartenlackierung. Weitere Prozessschritte können zum Beispiel Laserpersonalisierungen, Prägungen, usw. sein.

Als besondere Ausführungsform kann man auch Patches anstatt der Folie verwenden. Hierzu ist es nötig, die Photopolymerfolie so zu präparieren, dass sie einseitig mit einem Klebstoff abschließt, alternativ ist die Folie, auf die der Patch aufgebracht werden soll, mit einem Klebstoff versehen, Bevorzugt kommen hier thermische Reaktivkleber zum Einsatz, es können aber auch thermische Schmelzkleber oder lichtreaktive Systeme zum Einsatz kommen, In einer Applikationsstation, die z.B. in der Laminationsstrecke integriert sein kann, werden dann Patch und Folie in Kontakt gebracht, Der Patch dient zum Schutz besonders wichtiger Elemente. Das können z.13. Personalisierungen wie (ggf. später noch zu personalisierende) Lichtbilder sein, oder besonders wichtige Elemente im Kartenkörper wie Druckbereiche, Chips, Displays usw. Kennzeichnend ist die Notwendigkeit, dass sich das Volumenhologramm nicht von Haus aus mit dem übrigen Kartenmaterial laminieren lassen und deshalb ein laminierfähiger Verbund hergestellt wird.

## Patentansprüche

1. Verfahren zur Herstellung eines Laminatverbundes für ein Sicherheits- und/oder Wertdokument enthaltend zumindest eine erste Polymerschicht, eine zweite Polymerschicht und ein zwischen die erste Polymerschicht und die zweite Polymerschicht einzulaminierendes Volumenhologramm und mit den folgenden Verfahrensstufen:
a) zumindest eine Seite des Volumenhologrammsoder die dem Volumenhologramm zugewandte Seite der ersten Polymerschicht wird mit einem Klebstoff beschichtet, welcher reaktiv ist,
b) die erste Polymerschicht und das Volumenhologramm werden zueinander positioniert und miteinander kontaktiert,
c) der Klebstoff wird thermisch oder mittels Licht vernetzt, und
d) anschließend werden die erste und die zweite Polymerschicht unter Einschluss des Volumenhologramms unter Einwirkung von Druck sowie Erwärmung miteinander laminiert.

2. Verfahren nach Anspruch 1, wobei in Stufe b) oder nach Stufe c) und vor Stufe d) die zweite Polymerschicht zum Volumenhologramm positioniert und hiermit kontaktiert wird.

3. Verfahren nach Anspruch 1, wobei der reaktive Klebstoff bei einer Temperatur im Bereich von 40 °C bis 150 °C, vorzugsweise von 80 °C bis 120 °C, thermisch vernetzbar ist.

4. Verfahren nach einem der Ansprüche 1 bis 3, wobei als erste Polymerschicht eine Deckfolie und/oder als zweite Polymerschicht eine Overlayfolie ausgewählt wird.

5. Verfahren nach einem der Ansprüche 1 bis 4, wobei in Stufe a) die erste Polymerschicht vollflächig mit dem reaktiven Klebstoff beschichtet wird.

6. Verfahren nach einem der Ansprüche 1 bis 4, wobei in Stufe a) die erste Polymerschicht in Bereichen mit dem reaktiven Klebstoff beschichtet wird, welche mit dem Volumenhologramm kontaktiert werden.

7. Laminatverbund erhältlich mit einem Verfahren nach einem der Ansprüche 1 bis 6.

8. Sicherheits- und/oder Wertdokument enthaltend einen Laminatverbund nach Anspruch 7.

9. Verfahren zur Herstellung eines Kartenkörpers eines Sicherheits- und/oder Wertdokumentes nach Anspruch 8, wobei anschließend an die Verfahrensstufe d) der Laminatverbund einseitig oder beidseitig mit zumindest einer weiteren Polymerschicht oder zumindest zwei weiteren Polymerschichten flächig kontaktiert und anschließend damit laminiert wird.

10. Verfahren nach Anspruch 9, in der Alternative mit einseitig angeordneter weiterer Polymerschicht, wobei der Kartenkörper anschließend auf der der weiteren Polymerschicht gegenüber liegenden Seite des Laminatverbundes lackiert oder mit einer Schutzfolie bedeckt wird.

11. Verfahren nach Anspruch 9 oder 10, wobei das Grundpolymer der ersten und/oder oder zweiten Polymerschicht gleich dem Grundpolymer der weiteren Polymerschicht bzw. Polymerschichten ist, wobei die erste und die zweite Polymerschicht optional aus verschiedenen Grundpolymeren aufgebaut sein kann.

12. Verfahren nach Anspruch 11, wobei das Grundpolymer ausgewählt ist aus der Gruppe bestehend aus PC (Polycarbonat, insbesondere Bisphenol A Polycarbonat), PET (Polyethylenglykolterephthalat), PET-G, PET-F, PMMA (Polymethylmethacrylat), ABS (Acrylnitril-Butadien-Styrol), PE (Polyethylen), PP (Polypropylen), PI (Polyimid oder Poly-trans-Isopren), PVC (Polyvinylchlorid) und Copolymere solcher Polymere, vorzugsweise PC ist.

## Claims

1. A method for producing a laminated composite for a security and/or valuable document containing at least a first polymeric layer, a second polymeric layer, and a volume hologram to be laminated between the first polymeric layer and the second polymeric layer, and comprising the following steps:
a) at least one side of the volume hologram or the side of the first polymeric layer facing the volume hologram is coated with an adhesive that is reactive,
b) the first polymeric layer and the volume hologram are positioned relative to each other and are contacted with each other,
c) the adhesive is cross-linked thermally or by means of light, and
d) then the first and the second polymeric layers are laminated to each other, including the volume hologram, under the action of pressure and heat.

2. The method according to claim 1, wherein in step b) or after step c) and before step d), the second polymeric layer is positioned relative to the volume hologram and is contacted therewith.

3. The method according to claim 1, wherein the reactive adhesive can thermally be crosslinked at a temperature in the range from 40 °C to 150 °C, preferably from 80 °C to 120 °C.

4. The method according to one of claims 1 to 3, wherein a cover film is selected as the first polymeric layer, and/or an overlay film is selected as the second polymeric layer.

5. The method according to one of claims 1 to 4, wherein in step a), the first polymeric layer is coated on its entire surface with the reactive adhesive.

6. The method according to one of claims 1 to 4, wherein in step a), the first polymeric layer is coated with the reactive adhesive in areas, which are contacted with the volume hologram.

7. A laminated composite, obtainable with a method according to one of claims 1 to 6.

8. A security and/or valuable document containing a laminated composite according to claim 7.

9. A method for producing a card body of a security and/or valuable document according to claim 8, wherein after step d), the laminated composite is contacted on one side or both sides with at least one additional polymeric layer or at least two additional polymeric layers, and is then laminated therewith.

10. The method according to claim 9, in the alternative with the additional polymeric layer disposed on one side, wherein the card body is then, on the side of the laminated composite opposite to the additional polymeric layer, painted or covered with a protective film.

11. The method according to claim 9 or 10, wherein the base polymer of the first and/or second polymeric layers is identical to the base polymer of the additional polymeric layer or polymeric layers, respectively, wherein the first and the second polymeric layers may optionally be constructed from different base polymers.

12. The method according to claim 11, wherein the base polymer is selected from the group consisting of PC (polycarbonate, in particular bisphenol A polycarbonate), PET (polyethylene glycol terephthalate), PET-G, PET-F, PMMA (polymethyl methacrylate), ABS (acrylonitrile-butadiene-styrene), PE (polyethylene), PP (polypropylene), PI (polyimide or trans-polyisoprene), PVC (polyvinyl chloride), and copolymers of such polymers, preferably PC.

## Revendications

1. Procédé pour fabriquer un composite stratifié destiné à un document de sécurité et/ou de valeur et contenant au moins une première couche polymère, une seconde couche polymère et un hologramme de volume à être stratifié entre la première couche polymère et la seconde couche polymère, et comprenant les étapes suivantes:
a) appliquer une couche de colle réactive au moins sur un côté de l'hologramme de volume ou sur le côté de la première couche polymère faisant face à l'hologramme de volume,
b) positionner la première couche polymère et l'hologramme de volume l'un par rapport à l'autre, et les mettre en contact l'un avec l'autre,
c) laisser la colle se réticuler thermiquement ou au moyen de lumière, et
d) puis lier par laminage la première couche polymère et la seconde couche polymère l'une à l'autre, avec l'hologramme de volume inséré entre les deux, par application de pression et de chaleur.

2. Procédé selon la revendication 1, dans lequel dans l'étape b) ou après l'étape c) et avant l'étape d), la seconde couche polymère est positionnée par rapport à l'hologramme de volume et mise en contact avec celui-ci.

3. Procédé selon la revendication 1, dans lequel la colle réactive peut être réticulée thermiquement à une température comprise dans la gamme de 40 °C à 150 °C, de préférence de 80 °C à 120 °C.

4. Procédé selon une des revendications 1 à 3, dans lequel un film d'operculage est choisi comme première couche polymère, et/ou un film du type overlay est choisi comme seconde couche polymère.

5. Procédé selon une des revendications 1 à 4, dans lequel dans l'étape a), la première couche polymère est revêtue sur toute sa surface de la colle réactive.

6. Procédé selon une des revendications 1 à 4, dans lequel dans l'étape a), la première couche polymère est revêtue de la colle réactive dans des domaines, qui sont mis en contact avec l'hologramme de volume.

7. Composite stratifié, obtenable par un procédé selon une des revendications 1 à 6.

8. Document de sécurité et/ou de valeur contenant un composite stratifié selon la revendication 7.

9. Procédé pour fabriquer un corps de carte d'un document de sécurité et/ou de valeur selon la revendication 8, dans lequel après l'étape d), le composite stratifié est mis en contact sur un côté ou deux côtés avec au moins une couche polymère additionnelle ou au moins deux couches polymères additionnelles et est lié par laminage avec celle-ci ou celles ci.

10. Procédé selon la revendication 9, dans l'alternative avec la couche polymère additionnelle disposée sur un côté, dans lequel le corps de carte est puis, sur le côté du composite stratifié opposé à la couche polymère additionnelle, laqué ou revêtu d'un film protecteur.

11. Procédé selon la revendication 9 ou 10, dans lequel le polymère de base de la première et/ou seconde couche polymère est identique au polymère de base de la couche polymère additionnelle ou des couches polymères additionnelles, respectivement, dans lequel la première et la seconde couche polymère peuvent optionnellement être constituées de polymères de base différents.

12. Procédé selon la revendication 11, dans lequel le polymère de base est choisi à partir du groupe consistant en PC (polycarbonate, en particulier polycarbonate de bisphénol A), PET (polytéréphthalate d'éthylène), PET-G, PET-F, PMMA (polyméthacrylate de méthyle), ABS (acrylonitrile-butadiène-styrène), PE (polyéthylène), PP (polypropylène), PI (polyimide ou trans-polyisoprène), PVC (polychlorure de vinyle), et copolymères de tels polymères, de préférence PC.
